# EUROPEAN PATENT APPLICATION

(11) **EP 4 318 333 A1**
(43) Date of publication of application: **07.02.2024**
(21) Application number: 21934900.8
(22) Date of filing: 31.03.2021
(51) Int. Cl.: G06N 20/00

(54) **INFORMATION PRESENTATION PROGRAM, INFORMATION PRESENTATION METHOD, AND INFORMATION PRESENTATION DEVICE**

(71) Applicant: FUJITSU LIMITED, Kawasaki-shi, Kanagawa 211-8588 (JP)
(72) Inventor: KOYANAGI, Yusuke, Kawasaki-shi, Kanagawa 211-8588 (JP); UEMURA, Kento, Kawasaki-shi, Kanagawa 211-8588 (JP); OHORI, Kotaro, Kawasaki-shi, Kanagawa 211-8588 (JP)
(74) Representative: Hoffmann Eitle
(86) International application number: PCT/JP2021/013860
(87) International publication number: WO 2022/208734

(57) **Abstract**

An information presentation device generates a plurality of training models by executing machine learning that uses training data. The information presentation device generates hierarchical information that represents, in a hierarchical structure, a relationship between hypotheses shared as common and hypotheses regarded as differences for a plurality of hypotheses extracted from each of the plurality of training models and each designated by a combination of one or more explanatory variables.

## Description

### FIELD

The present invention relates to an information presentation program and the like.

### BACKGROUND

It is desired to find useful knowledge from data by machine learning. In a conventional technique, since it is difficult to perform perfect machine learning, a plurality of training models is generated and presented to a user.

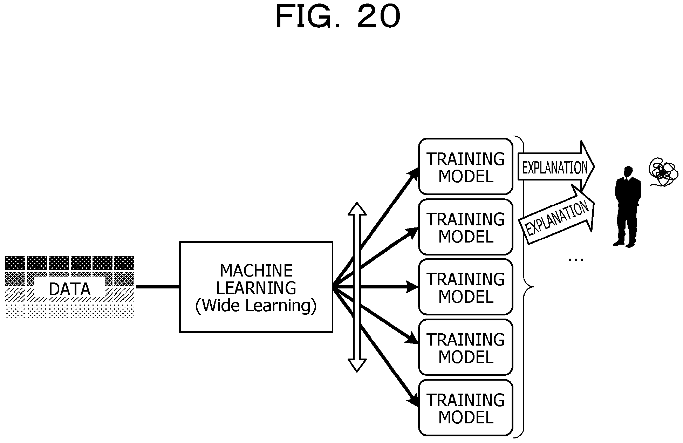

FIG. 20 is a diagram for explaining a conventional technique. In the conventional technique, when machine learning (wide learning) is executed based on data, a plurality of training models is generated and presented to a user by adjusting a parameter, a random seed, and preprocessing. The user will grasp a common point and a difference in the whole training models, based on the presented hypothesis sets of the plurality of training models, and select a training model for finding useful knowledge.

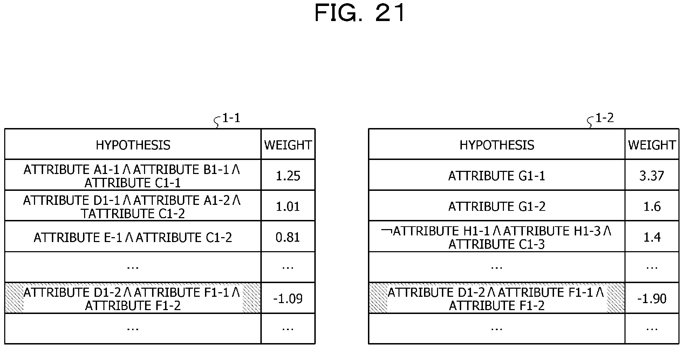

FIG. 21 is a diagram illustrating an example of the hypothesis sets of training models. The hypothesis set of the training model is information for explaining an output result of the training model and includes, for example, a hypothesis and a weight. The hypothesis is indicated by a set of a plurality of attributes. The weight indicates how much the relevant hypothesis affects the output result of the training model. When the weight has a positive value, a larger weight indicates that the relevant hypothesis is a hypothesis having greater influence when the hypothesis is determined to be "True". When the weight has a negative value, a smaller weight indicates that the relevant hypothesis is a hypothesis having greater influence when the hypothesis is determined to be "FALSE".

In FIG. 21, a hypothesis set 1-1 is assumed as a hypothesis set of one training model (first training model) to be compared, and a hypothesis set 1-2 is assumed as a hypothesis set of the other training model (second training model) to be compared. In the example illustrated in FIG. 21, among the respective hypotheses in the hypothesis set 1-1 and the respective hypotheses in the hypothesis set 1-2, some hypotheses such as the hypothesis "attribute D1-2 ∧ attribute F1-1 ∧ attribute F1-2" are common, but most hypotheses are not common.

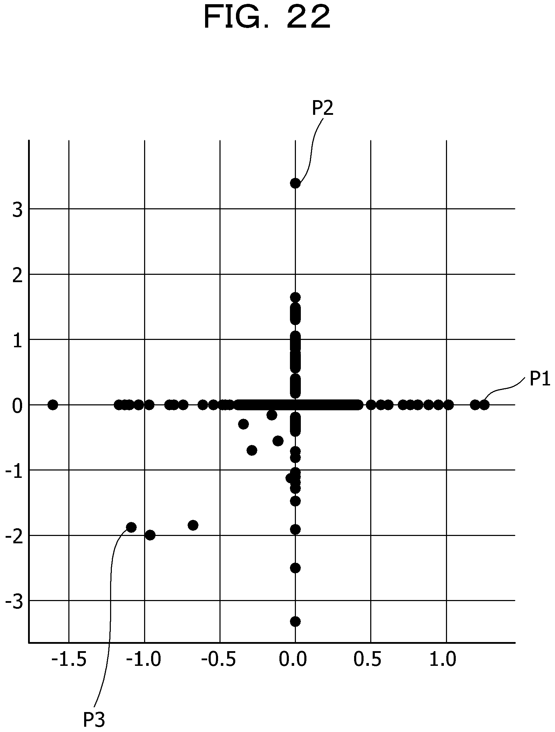

FIG. 22 is a diagram illustrating a relationship between hypotheses and weights of each hypothesis set. In FIG. 22, the vertical axis is an axis indicating the weight of the hypothesis of the first training model. The horizontal axis is an axis indicating the weight of the hypothesis of the second training model. For example, in the graph in FIG. 22, among the plurality of plotted points, the point P1 corresponds to the hypothesis "attribute A1-1 ∧ attribute B1-1 ∧ attribute C1-1" of the hypothesis set 1-1. The point P2 corresponds to the hypothesis "attribute G1-1" of the hypothesis set 1-2. The point P3 corresponds to a hypothesis "attribute D1-2 ∧ attribute F1-1 ∧ attribute F1-2" shared as common to the hypothesis sets 1-1 and 1-2. Description regarding other points will be omitted.

As illustrated in FIGs. 21 and 22, even if the hypothesis sets of a plurality of training models are compared, since most hypotheses do not coincide with each other, it is difficult for the user to judge the relationship between the training models even by actually referring to the hypothesis sets of the plurality of training models.

Therefore, the conventional technique takes measures by listing the top K training models in descending order of the objective function from the collection of all training models.

### SUMMARY

### TECHNICAL PROBLEM

However, when there is a bias in knowledge included in the top K training models, the completeness of knowledge is lowered if the top K training models are listed as in the conventional technique.

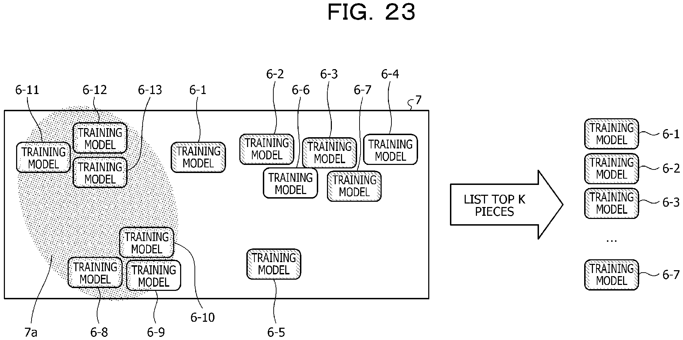

FIG. 23 is a diagram for explaining a disadvantage of the conventional technique. In the space 7 illustrated in FIG. 23, it is assumed that more similar training models are arranged closer. For example, the top K training models among a plurality of training models 6-1 to 6-13 are assumed to be training models 6-1, 6-2, 6-3, 6-5, and 6-7. Then, in the conventional technique, the training models 6-1, 6-2, 6-3, 6-5, and 6-7 are listed, but the other training models 6-4, 6-6, and 6-8 to 6-13 are not listed, and the knowledge in the region 7a can no longer be obtained.

As described with reference to FIG. 23, when the top K training models are listed in descending order of the objective function, there is a possibility of listing similar training models, and this makes it difficult to select a training model for finding useful knowledge.

In addition, as described with reference to FIGs. 21 and 22, it is also difficult for the user to actually compare hypothesis sets of training models and grasp common points and differences of similar training models, and even in hypothesis sets of the top K training models, most hypotheses do not coincide with each other in many cases.

That is, it is desired to easily compare complicated training models with each other.

In one aspect, an object of the present invention is to provide an information presentation program, an information presentation method, and an information presentation device capable of easily comparing complicated training models with each other.

### SOLUTION TO PROBLEM

In a first option, a computer is caused to execute the following processing. The computer generates a plurality of training models by executing machine learning that uses training data. The computer generates hierarchical information that represents, in a hierarchical structure, a relationship between hypotheses shared as common and hypotheses regarded as differences for a plurality of hypotheses extracted from each of the plurality of training models and each designated by a combination of one or more explanatory variables.

### ADVANTAGEOUS EFFECTS OF INVENTION

Comparison between complicated training models may be facilitated.

### BRIEF DESCRIPTION OF DRAWINGS

FIG. 1 is a diagram for explaining processing of an information presentation device according to the present embodiment.
FIG. 2 is a diagram (1) for explaining similarity determination processing executed by the information presentation device according to the present embodiment.
FIG. 3 is a diagram (2) for explaining similarity determination processing executed by the information presentation device according to the present embodiment.
FIG. 4 is a diagram (3) for explaining similarity determination processing executed by the information presentation device according to the present embodiment.
FIG. 5 is a diagram (4) for explaining similarity determination processing executed by the information presentation device according to the present embodiment.
FIG. 6 is a functional block diagram illustrating a configuration of the information presentation device according to the present embodiment.
FIG. 7 is a diagram illustrating an example of a data structure of training data.
FIG. 8 is a diagram illustrating an example of a data structure of a hypothesis database.
FIG. 9 is a diagram illustrating an example of a data structure of a common hypothesis set table.
FIG. 10 is a flowchart illustrating a processing procedure for specifying a hypothesis set shared as common.
FIG. 11 is a diagram for explaining processing of excluding a hypothesis inconsistent between hypothesis sets.
FIG. 12 is a diagram for explaining processing of generating a hypothesis shared as common between hypothesis sets.
FIG. 13 is a diagram illustrating relationships of training models with respect to a hypothesis set shared as common.
FIG. 14 is a diagram for explaining processing of updating a conclusion part in consideration of a weight of a hypothesis.
FIG. 15 is a flowchart illustrating a processing procedure of the information presentation device according to the present embodiment.
FIG. 16 is a flowchart (1) illustrating a processing procedure of a similarity calculation process.
FIG. 17 is a diagram illustrating an example of scatter diagrams of cumulative values of weights between training models.
FIG. 18 is a flowchart (2) illustrating a processing procedure of the similarity calculation process.
FIG. 19 is a diagram illustrating an example of a hardware configuration of a computer that implements functions similar to the functions of the information presentation device of the embodiment.
FIG. 20 is a diagram for explaining a conventional technique.
FIG. 21 is a diagram illustrating an example of hypothesis sets of training models.
FIG. 22 is a diagram illustrating a relationship between hypotheses and weights of each hypothesis set.
FIG. 23 is a diagram for explaining a disadvantage of the conventional technique.

### DESCRIPTION OF EMBODIMENTS

Hereinafter, embodiments of an information presentation program, an information presentation method, and an information presentation device disclosed in the present application will be described in detail with reference to the drawings. Note that these embodiments do not limit the present invention.

### [Embodiments]

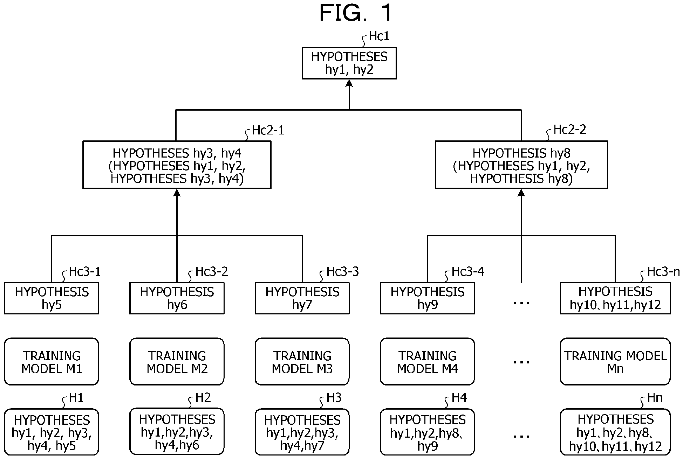

An example of processing of the information presentation device according to the present embodiment will be described. FIG. 1 is a diagram for explaining processing of the information presentation device according to the present embodiment. The information presentation device generates a plurality of training models M1, M2, M3, M4,..., Mn by executing machine learning using training data. In the following description, the plurality of training models M1 to Mn will be appropriately collectively referred to as "training models M".

The information presentation device acquires a hypothesis set from the training model M. The hypothesis set of the training model M will serve as information that explains an output result of the training model M. In the example illustrated in FIG. 1, a hypothesis set H1 of the training model M1 includes hypotheses hy1, hy2, hy3, hy4, and hy5. A hypothesis set H2 of the training model M2 includes hypotheses hy1, hy2, hy3, hy4, and hy6. A hypothesis set H3 of the training model M3 includes hypotheses hy1, hy2, hy3, hy4, and hy7.

A hypothesis set H4 of the training model M4 includes hypotheses hy1, hy2, hy8, and hy9. A hypothesis set Hn of the training model Mn includes hypotheses hy1, hy2, hy8, hy10, hy11, and hy12. Description of hypothesis sets of other training models M will be omitted.

The information presentation device executes similarity determination based on the hypothesis sets of the training models M and classifies the training models M into families of similar training models M. In the example illustrated in FIG. 1, the information presentation device classifies the training models M1, M2, and M3 into a first group. The information presentation device classifies the training models M4, Mn, and others into a second group. Description regarding other training models and other groups will be omitted.

The information presentation device compares the hypothesis sets H1 to H3 of the training models M1 to M3 belonging to the first group and specifies the hypotheses hy1, hy2, hy3, and hy4 shared as common. The information presentation device compares the hypothesis sets H4, Hn, and others of the training models M4, Mn, and others belonging to the second group and specifies the hypotheses hy1, hy2, and hy8 shared as common.

The information presentation device compares the "hypotheses hy1, hy2, hy3, and hy4" shared as common to the first group with the "hypotheses hy1, hy2, and hy8" shared as common to the second group to specify the "hypotheses hy1 and hy2" shared as common to the first and second groups.

The information presentation device generates hierarchical information in which common hypothesis sets Hc1, Hc2-1, and Hc2-2 and unique hypothesis sets Hc3-1, Hc3-2, Hc3-3, Hc3-4, and Hc3-n are coupled, based on the execution result of the above.

The common hypothesis set Hc1 includes "hypotheses hy1 and hy2" shared as common to all training models M. The common hypothesis set Hc2-1 is a hypothesis set shared as common to the training models M1 to M3 belonging to the first group and includes "hypotheses hy3 and hy4" obtained by excluding the hypotheses of the common hypothesis set Hc1. The common hypothesis set Hc2-2 is a hypothesis set shared as common to the training models M4, Mn, and others belonging to the second group and includes the "hypothesis hy8" obtained by excluding the hypotheses of the common hypothesis set Hc1.

The unique hypothesis set Hc3-1 includes the "hypothesis hy5" unique to the training model M1 obtained by excluding the hypotheses of the common hypothesis sets Hc1 and Hc2-1 from the hypothesis set H1 included in the training model M1. The unique hypothesis set Hc3-2 includes the "hypothesis hy6" unique to the training model M2 obtained by excluding the hypotheses of the common hypothesis sets Hc1 and Hc2-1 from the hypothesis set H2 included in the training model M2. The unique hypothesis set Hc3-3 includes the "hypothesis hy7" unique to the training model M3 obtained by excluding the hypotheses of the common hypothesis sets Hc1 and Hc2-1 from the hypothesis set H3 included in the training model M3.

The unique hypothesis set Hc3-4 includes the "hypothesis hy9" unique to the training model M4 obtained by excluding the hypotheses of the common hypothesis sets Hc1 and Hc2-2 from the hypothesis set H4 included in the training model M4. The unique hypothesis set Hc3-n includes the "hypotheses hy10, hy11, and hy12" unique to the training model Mn obtained by excluding the hypotheses of the common hypothesis sets Hc1 and Hc2-2 from the hypothesis set Hn included in the training model Mn.

As described with reference to FIG. 1, the information presentation device generates the hierarchical information representing, in a hierarchical structure, a relationship between hypotheses shared as common and hypotheses regarded as differences, for a plurality of hypotheses extracted from each of the training models M and designated by combinations of one or more attributes (explanatory variables). The user may be allowed to easily compare the complicated training models with each other by referring to the hierarchical information.

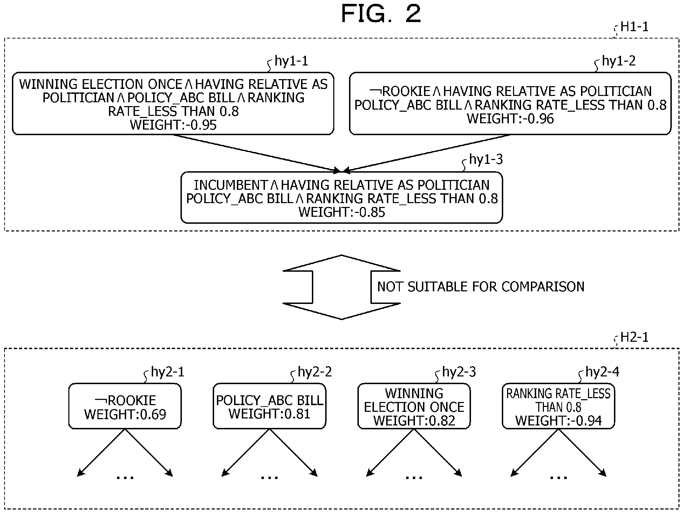

Subsequently, processing in which the information presentation device according to the present embodiment determines similarity based on the hypothesis sets of the training models M will be described. FIG. 2 is a diagram (1) for explaining similarity determination processing executed by the information presentation device according to the present embodiment. The information presentation device is allowed to calculate the similarity by aligning the granularity of the hypotheses and calculating the cumulative values of weights even between training models that are difficult to compare.

In FIG. 2, description will be made using a hypothesis set H1-1 of the training model M1 and a hypothesis set H2-1 of the training model M2. The hypothesis set H1-1 is assumed to include hypotheses hy1-1, hy1-2, and hy1-3. The hypothesis set H2-1 is assumed to include hypotheses hy2-1, hy2-2, hy2-3, and hy2-4.

The hypothesis hy1-1 is a hypothesis constituted by a combination of the attributes "winning the election once", "having a relative as a politician", "policy_ABC bill", and "ranking rate_less than 0.8" and has a weight of "-0.95". The hypothesis hy1-2 is a hypothesis constituted by a combination of the attributes "¬ rookie (denial of rookie)", "having a relative as a politician", "policy_ABC bill", and "ranking rate_less than 0.8" and has a weight of "-0.96". The hypothesis hy1-3 is a hypothesis constituted by a combination of the attributes "incumbent", "having a relative as a politician", "policy_ABC bill", and "ranking rate_less than 0.8" and has a weight of "-0.85". The attribute is an example of the explanatory variable.

Comparing each attribute of the hypothesis hy1-3 with each attribute of the hypothesis hy1-1, the attribute "incumbent" of the hypothesis hy1-3 includes the attribute "winning the election once" of the hypothesis hy1-1. Since the other attributes coincide with each other between the hypotheses hy1-1 and hy1-3, the hypothesis hy1-3 is a hypothesis including the hypothesis hy1-1.

Comparing each attribute of the hypothesis hy1-3 with each attribute of the hypothesis hy1-2, the attribute "incumbent" of the hypothesis hy1-3 includes the attribute "¬ rookie" of the hypothesis hy1-2. Since the other attributes coincide with each other between the hypotheses hy1-2 and hy1-3, the hypothesis hy1-3 is a hypothesis including the hypothesis hy1-2.

The hypothesis hy2-1 is a hypothesis constituted by the attribute "¬ rookie" and has a weight of "0.69". The hypothesis hy2-2 is a hypothesis constituted by the attribute "policy_ABC bill" and has a weight of "0.81". The hypothesis hy2-3 is a hypothesis constituted by the attribute "winning the election once" and has a weight of "0.82". The hypothesis hy2-4 is a hypothesis constituted by the attribute "ranking rate_less than 0.8" and has a weight of "-0.94".

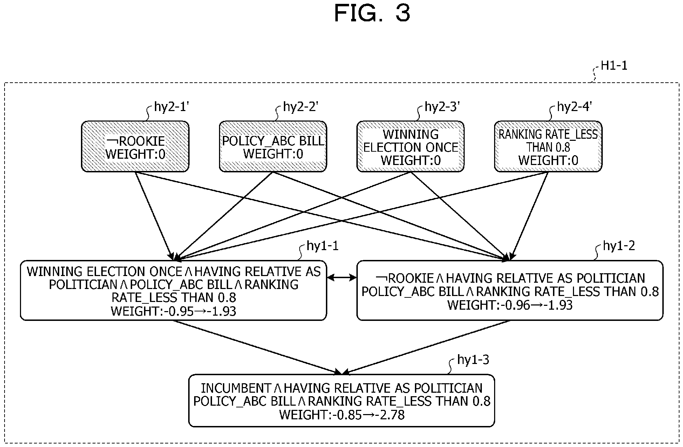

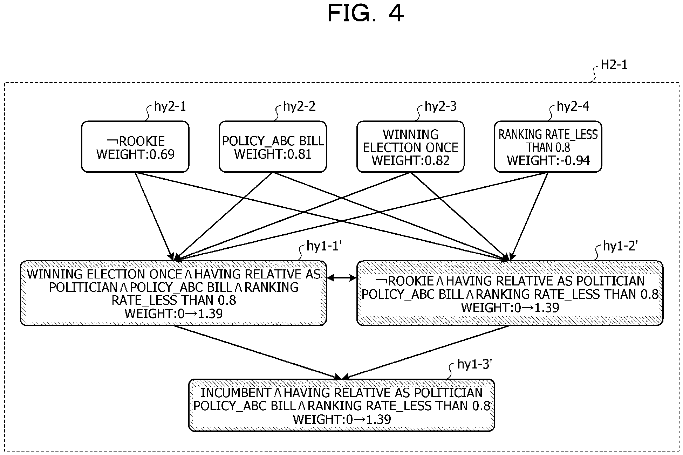

The hypothesis sets H1-1 and H2-1 illustrated in FIG. 2 do not have the aligned granularity of hypotheses and are not suitable for comparison. As illustrated in FIGs. 3 and 4, the information presentation device executes processing of aligning the granularity of hypotheses between the hypothesis sets H1-1 and H2-1.

FIG. 3 is a diagram (2) for explaining similarity determination processing executed by the information presentation device according to the present embodiment. In FIG. 3, the information presentation device adds, to the hypothesis set H1-1, hypotheses hy2-1', hy2-2', hy2-3', and hy2-4' corresponding to the hypotheses hy2-1 to hy2-4 of the hypothesis set H2-1. Since the hypothesis set H1-1 does not contain hypotheses corresponding to the hypotheses hy2-1', hy2-2', hy2-3', and hy2-4', the information presentation device sets the weights (initial values) of the hypotheses hy2-1', hy2-2', hy2-3', and hy2-4' to zero.

The hypotheses hy2-1', hy2-2', hy2-3', and hy2-4' are included in the hypothesis hy1-1. The hypotheses hy2-1', hy2-2', hy2-3', and hy2-4' are also included in the hypothesis hy1-2. In addition, it is assumed that the hypotheses hy1-1 and hy1-2 have an inclusion relationship with each other.

The information presentation device adds the weights of the hypotheses hy2-1', hy2-2', hy2-3', and hy2-4' (the weights are zero) to the weight of the hypothesis hy1-1 as a destination of inclusion. In addition, since the hypotheses hy1-1 and hy1-2 have an inclusion relationship with each other, the information presentation device updates the weight of the hypothesis hy1-1 to "-1.93" by adding the weight of the hypothesis hy1-2 to the weight of the hypothesis hy1-1.

The information presentation device adds the weights of the hypotheses hy2-1', hy2-2', hy2-3', and hy2-4' (the weights are zero) to the weight of the hypothesis hy1-2 as a destination of inclusion. In addition, since the hypotheses hy1-1 and hy1-2 have an inclusion relationship with each other, the information presentation device updates the weight of the hypothesis hy1-2 to "-1.93" by adding the weight of the hypothesis hy1-1 to the weight of the hypothesis hy1-2.

Since the hypotheses hy1-1 and hy1-2 are in an inclusion relationship with each other, the information presentation device updates the weight of the hypothesis hy1-3 to "-2.78" by adding the weight of the hypothesis hy1-1 or the weight of the hypothesis hy1-2 to the weight of the hypothesis hy1-3 as a destination of inclusion.

The information presentation device executes the processing in FIG. 3 to calculate a vector V1-1 of the hypothesis set H1-1. The vector V1-1 of the hypothesis set H1-1 is a vector in which each of the hypotheses hy2-1' to hy2-4' and hy1-1 to hy1-3 is assigned as one dimension, and the value of each dimension is assigned by the weight of one of the hypotheses. For example, the vector V1-1 = [0, 0, 0, 0, -1.93, -1.93, -2.78] is given.

FIG. 4 is a diagram (3) for explaining similarity determination processing executed by the information presentation device according to the present embodiment. In FIG. 4, the information presentation device adds, to the hypothesis set H2-1, hypotheses hy1-1', hy1-2', and hy1-3' corresponding to the hypotheses hy1-1 to hy1-3 of the hypothesis set H1-1. Since the hypothesis set H2-1 does not contain hypotheses corresponding to the hypotheses hy1-1', hy1-2', and hy1-3', the information presentation device sets the weights (initial values) of the hypotheses hy1-1', hy1-2', and hy1-3' to zero.

The hypotheses hy2-1, hy2-2, hy2-3, and hy2-4 are included in the hypothesis hy1-1. The hypotheses hy2-1, hy2-2, hy2-3, and hy2-4 are also included in the hypothesis hy1-2. In addition, the hypotheses hy1-1 and hy1-2 have an inclusion relationship with each other.

Since the hypotheses hy1-1' and hy1-2' have an inclusion relationship with each other, the information presentation device adds the weight (initial value 0) of the hypothesis hy1-2' to the hypothesis hy1-1'. In addition, the information presentation device updates the weight of the hypothesis hy1-1' to "1.39" by adding the weights (initial values) of the hypotheses hy2-1, hy2-2, hy2-3, and hy2-4 to the weight of the hypothesis hy1-1' as a destination of inclusion.

Since the hypotheses hy1-1' and hy1-2' have an inclusion relationship with each other, the information presentation device adds the weight (initial value 0) of the hypothesis hy1-1' to the hypothesis hy1-2'. In addition, the information presentation device updates the weight of the hypothesis hy1-2' to "1.39" by adding the weights (initial values) of the hypotheses hy2-1, hy2-2, hy2-3, and hy2-4 to the weight of the hypothesis hy1-2' as a destination of inclusion.

Since the hypotheses hy1-1' and hy1-2' are in an inclusion relationship with each other, the information presentation device updates the weight of the hypothesis hy1-3' to "1.39" by adding the weight of the hypothesis hy1-1' or the weight of the hypothesis hy1-2' to the weight of the hypothesis hy1-3' as a destination of inclusion.

The information presentation device executes the processing in FIG. 4 to calculate a vector V2-1 of the hypothesis set H2-1. The vector V2-1 of the hypothesis set H2-1 is a vector in which each of the hypotheses hy2-1 to hy2-4 and hy1-1' to hy1-3' is assigned as one dimension, and the value of each dimension is assigned by the weight of one of the hypotheses. For example, the vector V2-1 = [0.69, 0.81, 0.82, -0.94, 1.39, 1.39, 1.39] is given.

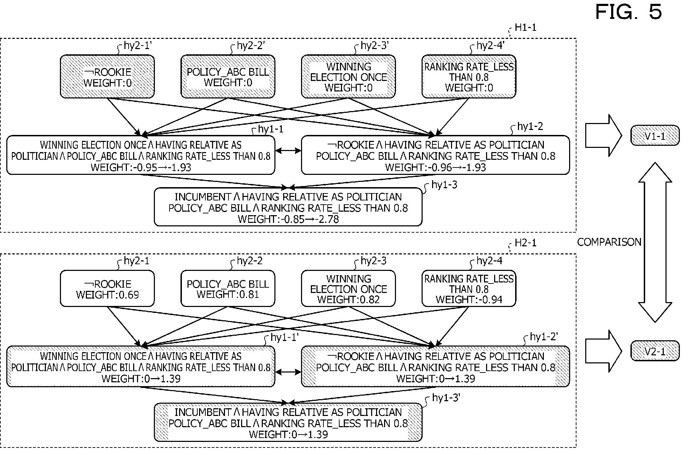

FIG. 5 is a diagram (4) for explaining similarity determination processing executed by the information presentation device according to the present embodiment. The information presentation device compares the vector V1-1 of the hypothesis set H1-1 with the vector V2-1 of the hypothesis set H2-1 to calculate the similarity between the hypothesis sets H1-1 and H1-2. As described with reference to FIGs. 2 to 5, the information presentation device is allowed to calculate the similarity by aligning the granularity of the hypotheses to calculate the cumulative values of weights and using the cumulative values as the value of each dimension of the vectors. The information presentation device calculates the similarity of the training models M by executing processing of calculating the similarity for all combinations of the training models M. The information presentation device classifies training models having similarity equal to or higher than a threshold value into the same group and executes the processing described with reference to FIG. 1.

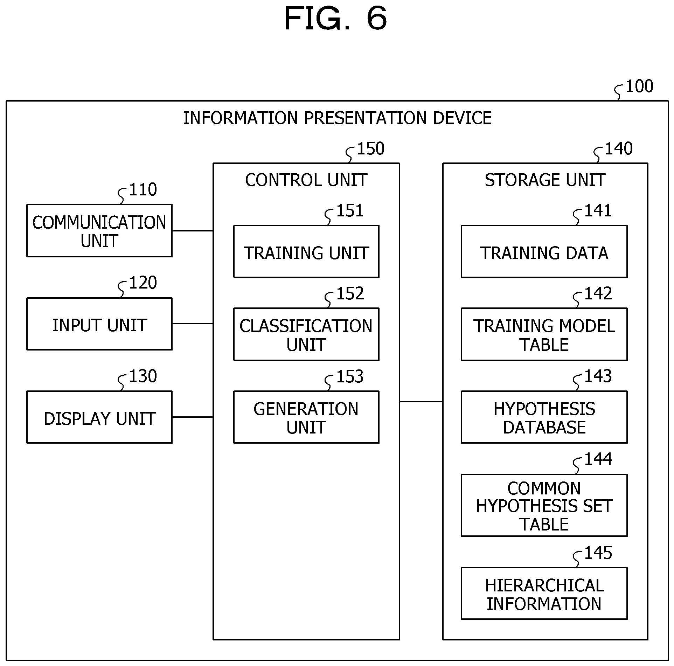

Next, an example of a configuration of the information presentation device according to the present embodiment will be described. FIG. 6 is a functional block diagram illustrating a configuration of the information presentation device according to the present embodiment. As illustrated in FIG. 6, this information presentation device 100 includes a communication unit 110, an input unit 120, a display unit 130, a storage unit 140, and a control unit 150.

The communication unit 110 is coupled to an external device or the like in a wired or wireless manner and transmits and receives information to and from the external device or the like. For example, the communication unit 110 is implemented by a network interface card (NIC) or the like. The communication unit 110 may be coupled to a network (not illustrated).

The input unit 120 is an input device that inputs various types of information to the information presentation device 100. The input unit 120 corresponds to a keyboard, a mouse, a touch panel, or the like.

The display unit 130 is a display device that displays information output from the control unit 150. The display unit 130 corresponds to a liquid crystal display, an organic electro luminescence (EL) display, a touch panel, or the like.

The storage unit 140 includes training data 141, a training model table 142, a hypothesis database 143, a common hypothesis set table 144, and hierarchical information 145. The storage unit 140 corresponds to a semiconductor memory element such as a random access memory (RAM), a read only memory (ROM), or a flash memory, or a storage device such as a hard disk drive (HDD).

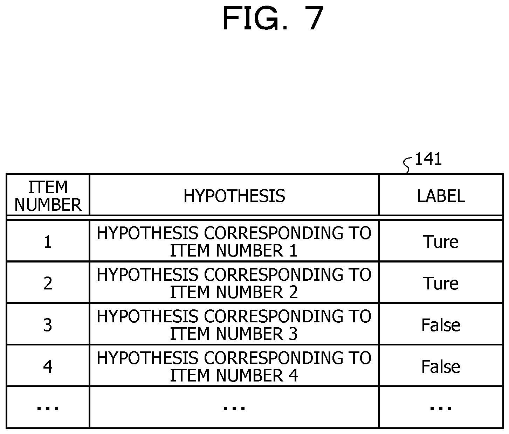

The training data 141 is data in which a hypothesis and a label corresponding to this hypothesis are associated with each other. FIG. 7 is a diagram illustrating an example of a data structure of the training data. As illustrated in FIG. 7, this training data 141 associates an item number, a hypothesis, and a label. The item number is a number that identifies each hypothesis. The hypothesis indicates a combination of a plurality of attributes and for example, the respective attributes are made correlated by an AND condition or the like. The attribute corresponds to an explanatory variable. The label is a correct answer label corresponding to the hypothesis and is set with "True" or "False".

The training model table 142 is a table that holds the plurality of training models M. The training model is generated by a training unit 151. Description of the data structure of the training model table 142 will be omitted.

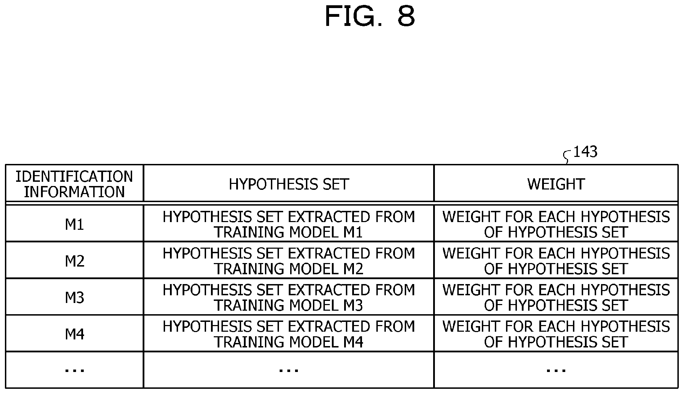

The hypothesis database 143 is a table that holds the hypothesis sets extracted from the training models M. FIG. 8 is a diagram illustrating an example of a data structure of the hypothesis database. As illustrated in FIG. 8, this hypothesis database 143 associates identification information, a hypothesis set, and a weight. The identification information is information that identifies the training model M. The hypothesis set is information for explaining the training model and is extracted from the training model. The hypothesis set includes a plurality of hypotheses. The hypothesis is expressed by one or more attributes (explanatory variables). The weight is a weight set in each hypothesis.

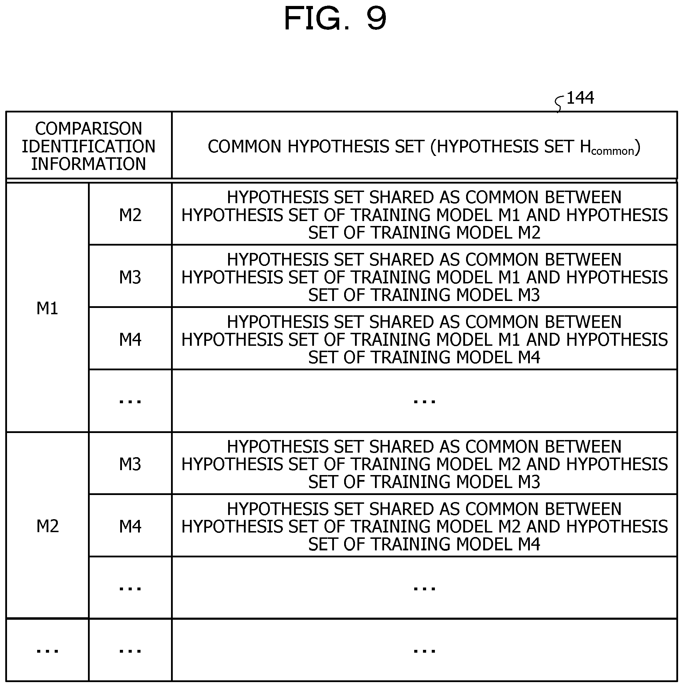

The common hypothesis set table 144 is a table that holds the hypothesis sets shared as common, among the hypothesis sets of the respective training models. FIG. 9 is a diagram illustrating an example of a data structure of the common hypothesis set table. As illustrated in FIG. 9, the common hypothesis set table 144 includes comparison identification information and the common hypothesis set. The comparison identification information is information that identifies a set of training models M to be compared. The common hypothesis set indicates a hypothesis set (one or more hypotheses) shared as common in the hypothesis sets of the respective compared training models M.

The hierarchical information 145 indicates information obtained by hierarchically coupling the common hypothesis set indicating hypotheses shared as common and the unique hypothesis set indicating hypotheses regarded as differences in the hypothesis sets of the training models M. For example, the hierarchical information 145 corresponds to the common hypothesis sets Hc1, Hc2-1, and Hc2-2 and the unique hypothesis sets Hc3-1 to Hc3-n described with reference to FIG. 1. Note that, in the following description, the common hypothesis set will be appropriately referred to as a hypothesis set H_{common}.

The control unit 150 includes the training unit 151, a classification unit 152, and a generation unit 153. The control unit 150 can be implemented by a central processing unit (CPU), a micro processing unit (MPU), or the like. In addition, the control unit 150 can also be implemented by a hard wired logic such as an application specific integrated circuit (ASIC) or a field programmable gate array (FPGA).

The training unit 151 generates the training model M by executing machine learning based on the training data 141. When executing machine learning, the training unit 151 generates a plurality of training models M by altering parameters, random seeds, preprocessing, and the like of the training models M. The training unit 151 registers the plurality of generated training models M in the training model table 142.

For example, the training unit 151 may execute machine learning based on a technique described in Patent Document (Japanese Laid-open Patent Publication No. 2020-46888) or the like, or may execute machine learning using another conventional technique. The training model M generated by machine learning includes a hypothesis set for explaining an output result of this training model M, and weights are set individually in each hypothesis. Note that the training unit 151 may generate different training models M by further using a plurality of pieces of training data (not illustrated).

The classification unit 152 classifies the plurality of training models M into a plurality of groups according to the similarity. It is assumed that training models belonging to the same group are similar to each other. The classification unit 152 outputs the classification result for the training models M to the generation unit 153. Hereinafter, an example of processing of the classification unit 152 will be described. For example, the classification unit 152 executes processing of generating the hypothesis database, processing of specifying the similarity between the training models, and processing of classifying the training models.

Processing in which the classification unit 152 generates the hypothesis database 143 will be described. The classification unit 152 extracts the hypothesis set of the training model M and a weight included in this hypothesis set from the training model M registered in the training model table 142 and registers the extracted hypothesis set and weight in the hypothesis database 143. When registering the hypothesis set and the weight in the hypothesis database 143, the classification unit 152 associates the hypothesis set and the weight with the identification information on the training model M. The classification unit 152 repeatedly executes the above processing for each training model M.

Processing in which the classification unit 152 specifies the similarity between the training models will be described. The processing in which the classification unit 152 specifies the similarity corresponds to the processing described above with reference to FIGs. 2 to 5. The classification unit 152 selects training models for which the similarity is to be compared. For example, a case where the classification unit 152 selects the training model M1 with the identification information "M1" and the training model M2 with the identification information "M2" will be described.

The classification unit 152 compares the hypothesis set of the training model M1 with the hypothesis set of the training model M2, based on the hypothesis database 143. For convenience, the hypothesis set of the training model M1 will be referred to as a first hypothesis set, and the hypothesis set of the training model M2 will be referred to as a second hypothesis set.

The classification unit 152 adds, to the first hypothesis set, a hypothesis that exists in the second hypothesis set but does not exist in the first hypothesis set. The classification unit 152 adds, to the second hypothesis set, a hypothesis that exists in the first hypothesis set but does not exist in the second hypothesis set. By executing such processing, the classification unit 152 aligns the granularity of the hypotheses of the first hypothesis set with the granularity of the hypotheses of the second hypothesis set.

The classification unit 152 determines the inclusion relationship between the hypotheses for the first hypothesis set and the second hypothesis set after aligning the granularity of the hypotheses. The classification unit 152 may determine the inclusion relationship in any manner and, for example, determines the inclusion relationship of each hypothesis based on a table defining the inclusion relationships regarding each attribute. In such a table, information such as "winning the election once" and "¬ rookie" being included in "incumbent" is defined.

The classification unit 152 allocates a weight to each hypothesis for the first hypothesis set and the second hypothesis set, by calculating the cumulative value of weights set in hypotheses, based on the inclusion relationships between the hypotheses. The processing in which the classification unit 152 calculates the cumulative values to calculates the weights and allocates the weights to each hypothesis corresponds to the processing described with reference to FIGs. 4 and 5.

The classification unit 152 specifies a first vector in which each hypothesis of the first hypothesis set is assigned as one dimension and the value of each dimension is assigned by the cumulative value of one of the hypotheses. The classification unit 152 specifies a second vector in which each hypothesis of the second hypothesis set is assigned as one dimension and the value of each dimension is assigned by the cumulative value of one of the hypotheses. The classification unit 152 specifies the distance between the first vector and the second vector as the similarity.

The classification unit 152 specifies the similarity between the respective training models by repeatedly executing the above processing for all the combinations of the training models M.

Processing in which the classification unit 152 classifies the training models will be described. The training unit 151 specifies the similarity between the training models by executing the above processing and classifies training models having similarity equal to or higher than a threshold value into the same group. For example, when the similarity between the training models M1 and M2 is equal to or higher than the threshold value and the similarity between the training models M2 and M3 is equal to or higher than the threshold value, the classification unit 152 classifies the training models M1, M2, and M3 into the same group. The classification unit 152 classifies the plurality of training models into a plurality of groups by executing the above processing and outputs the classification result to the generation unit 153.

Here, it is assumed that the hypothesis added to each hypothesis set by the classification unit 152 in order to align the granularity of the hypotheses is used only when the classification unit 152 generates a vector and will not be used by the generation unit 153 to be described below.

By executing the processing described with reference to FIG. 1, the generation unit 153 generates the hierarchical information 145 in which the common hypothesis sets (for example, the common hypothesis sets Hc1, Hc2-1, Hc2-2) and the unique hypothesis sets (for example, the unique hypothesis sets Hc3-1 to Hc3-n) are hierarchically coupled. The generation unit 153 may output the hierarchical information 145 to display the hierarchical information 145 on the display unit 130 or may transmit the hierarchical information 145 to an external device coupled to the network.

As described with reference to FIG. 1, the generation unit 153 compares the hypothesis sets of the training models M classified into the same group to specify the common hypothesis set in the same group. In addition, it is assumed that the generation unit 153 compares the common hypothesis sets of the respective groups to specify the common hypothesis set between different groups.

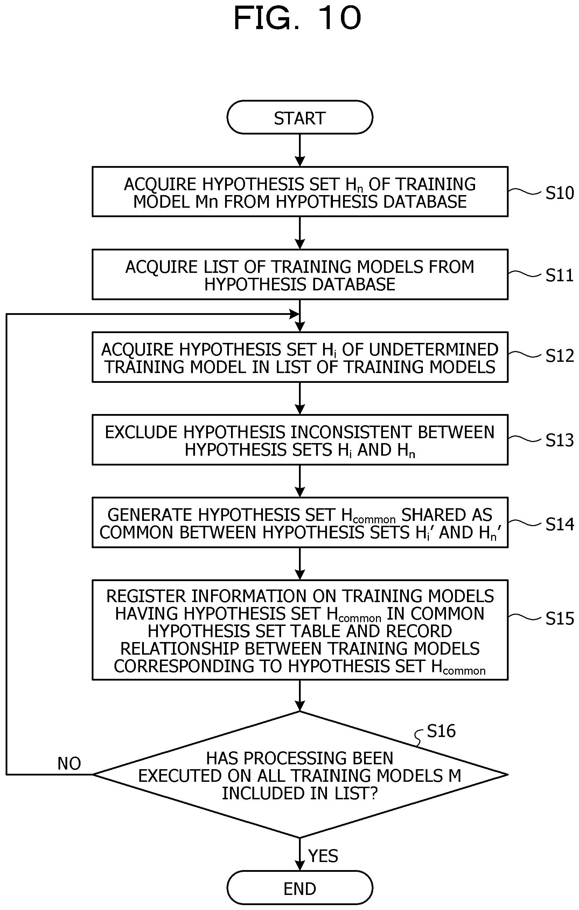

Here, an example of a processing procedure in which the generation unit 153 specifies the hypothesis set shared as common will be described. FIG. 10 is a flowchart illustrating a processing procedure for specifying a hypothesis set shared as common. In FIG. 10, as an example, a case where a common hypothesis set shared as common to the hypothesis set Hₙ of the training model Mn and the hypothesis set of another training model M is specified will be described.

The generation unit 153 of the information presentation device 100 acquires the hypothesis set Hₙ of the training model Mn from the hypothesis database 143 (step S10). The generation unit 153 acquires a list of the training models M from the hypothesis database 143 (step S11).

The generation unit 153 acquires a hypothesis set Hᵢ of an undetermined training model M in the list of the training models M (step S12). The generation unit 153 excludes a hypothesis inconsistent between the hypothesis sets Hᵢ and Hₙ (step S13). Here, the hypothesis sets Hᵢ and Hₙ from which inconsistent hypotheses have been excluded will be referred to as hypothesis sets Hᵢ' and Hₙ', respectively.

The generation unit 153 generates the hypothesis set H_{common} shared as common to the hypothesis sets Hᵢ' and Hₙ' (step S14). The generation unit 153 registers information on the training models having the hypothesis set H_{common} in the common hypothesis set table 144 and records a relationship between the training models corresponding to the hypothesis set H_{common} (step S15).

When the processing has not been executed on all the training models M included in the list (step S16, No), the generation unit 153 proceeds to step S12. When the processing has been executed on all the training models M included in the list (step S16, Yes), the generation unit 153 ends the processing.

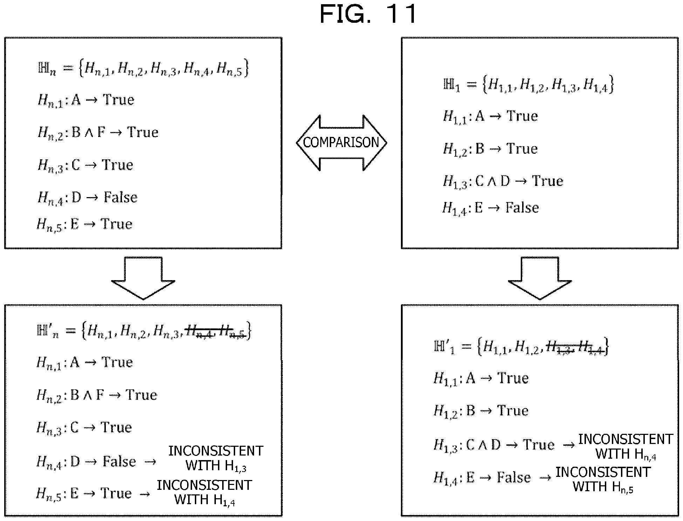

Here, an example of the processing of excluding a hypothesis inconsistent between the hypothesis sets described in step S13 in FIG. 10 will be described. FIG. 11 is a diagram for explaining processing of excluding a hypothesis inconsistent between hypothesis sets. For example, the generation unit 153 executes "inconsistency determination" as follows. For two hypotheses "H1: C1 → R1" and "H2: C2 → R2", the generation unit 153 determines that H1 and H2 are inconsistent (True) when the condition part is in the inclusion relationship "C1 ⊃ C2 ∨ C1 ⊂ C2" and the conclusion part is in the exclusion relationship "R1 ∨ R2 -> ϕ".

In FIG. 11, description will be made using the hypothesis set Hₙ of the training model Mn and a hypothesis set H₁ of the training model M1.

It is assumed that the hypothesis set Hₙ of the training model Mn includes hypotheses {H_{n,1}, H_{n,2}, H_{n,3}, H_{n,4}, H_{n,5}}. Each hypothesis is assumed as indicated below. Each of A, B, C, D, E, and F in the hypotheses is an example of an attribute (explanatory variable).
Hₙ₁: A → True
H_{n,2}: B ∧ F → True
H_{n,3}: C → True
H_{n,4}: D → False
H_{n,5}: E → True

It is assumed that the hypothesis set H₁ of the training model M1 includes hypotheses {H_{1,1}, H_{1,2}, H_{1,3}, H_{1,4}, H_{1,5}}. Each hypothesis is assumed as indicated below. Each of A, B, C, D, E, and F in the hypotheses is an example of an attribute (explanatory variable).
H_{1,1}: A → True
H_{1,2}: B → True
H_{1,3}: C ∧ D → True
H_{1,4}: E → False

When executing the above inconsistency determination, the generation unit 153 determines that H_{n,4} of the hypothesis set Hₙ and H_{1,3} of the hypothesis set H₁ are inconsistent. In addition, the generation unit 153 determines that H_{n,5} of the hypothesis set Hₙ and H_{1,4} of the hypothesis set H₁ are inconsistent.

The generation unit 153 generates a hypothesis set Hₙ' by excluding inconsistent H_{n,4}, and H_{n,5} from the hypothesis set Hₙ, based on the result of the inconsistency determination. The generation unit 153 generates a hypothesis set H₁' by excluding inconsistent H_{1,4}, and H_{1,5} from the hypothesis set H₁, based on the result of the inconsistency determination.

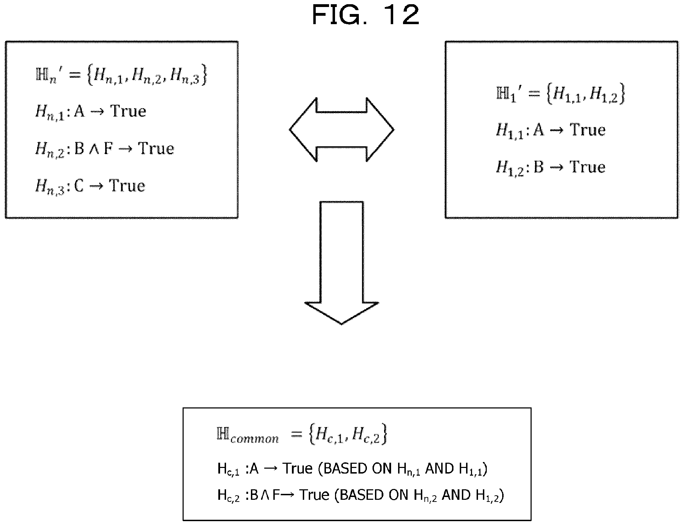

Subsequently, an example of processing of generating a hypothesis shared as common between the hypothesis sets described in step S14 in FIG. 10 will be described. FIG. 12 is a diagram for explaining processing of generating a hypothesis shared as common between hypothesis sets. For example, the generation unit 153 executes "common hypothesis generation" as follows. The generation unit 153 determines whether or not the condition parts are in the inclusion relationship "C1 ⊃ C2 ∨ C1 ⊂ C2" for two hypotheses "H1: C1 → R1" and "H2: C2 → R2". When the condition parts are in the inclusion relationship, the generation unit 153 assigns the common part of the condition parts as "Cc = C1 ∧ C2" and assigns the common part of the conclusion parts as "Rc = R1 ∧ R2" to assign "Cc → Rc" as a common hypothesis.

In FIG. 12, description will be made using the hypothesis set Hₙ' (the hypothesis set Hₙ from which the inconsistent hypotheses have been removed) of the training model Mn and the hypothesis set H₁' (the hypothesis set H₁ from which the inconsistent hypotheses have been removed) of the training model M1.

It is assumed that the hypothesis set Hₙ' of the training model Mn includes hypotheses {H_{n,1}, H_{n,2}, H_{n,3}}. It is assumed that the hypothesis set H₁' of the training model M1 includes hypotheses {H_{1,1}, H_{1,2}, H_{1,3}}.

Since the hypothesis H_{n,1} of the hypothesis set Hₙ' and the hypothesis H_{1,1} of the hypothesis set H₁' coincide with each other, the generation unit 153 generates a common hypothesis "H_{c,1}: A → True".

Description will be made of the common hypothesis generation for the hypothesis H_{n,2} of the hypothesis set Hₙ' and the hypothesis H_{1,2} of the hypothesis set H₁' by the generation unit 153. In the generation unit 153, the condition part "B ∧ F" of the hypothesis H_{n,2} and the condition part "B" of the hypothesis H_{1,2} are in the inclusion relationship "B ∧ F ⊃ B ∨ B ∧ F ⊂ B". Therefore, the generation unit 153 generates the common portion "Cc = (B) ∧ (B ∧ F)" = "Cc = B ∧ B ∧ F" = "Cc = B ∧ F" of the condition parts. The generation unit 153 generates the common portion "True" of the conclusion parts. By the above processing, the generation unit 153 generates the common hypothesis "B ∧ F → True" for the hypotheses H_{n,2} and H_{1,2}.

By executing the above processing, the generation unit 153 generates the hypothesis set H_{common} shared as common between the hypothesis set Hₙ' of the training model Mn and the hypothesis set H₁' of the training model M1. For example, the hypothesis set H_{common} shared as common includes hypotheses {H_{c,1}, H_{c,2}}. Each of the hypotheses is assumed as indicated below.
H_{c,1}: A → True
H_{c,2}: B ∧ F → True

The generation unit 153 records a relationship between the training models corresponding to the hypothesis set H_{common} shared as common, based on the result of the processing performed in FIG. 12.

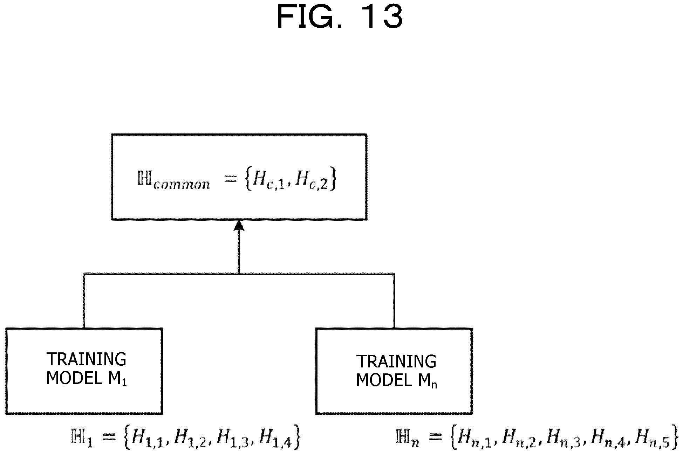

FIG. 13 is a diagram illustrating relationships of training models with respect to a hypothesis set shared as common. In the example illustrated in FIG. 13, the hypothesis set H_{common} shared as common to the hypothesis set H₁ corresponding to the training model M1 and the hypothesis set Hₙ corresponding to the training model Mn is illustrated. The generation unit 153 registers the relationships illustrated in FIG. 13 for the training models with respect to the hypothesis set shared as common, in the common hypothesis set table 144 of the storage unit 140. For example, the generation unit 153 associates a set of identification information on the compared training models M with the hypothesis set H_{common} shared as common and registers the associated set of identification information and hypothesis set H_{common} in the common hypothesis set table 144.

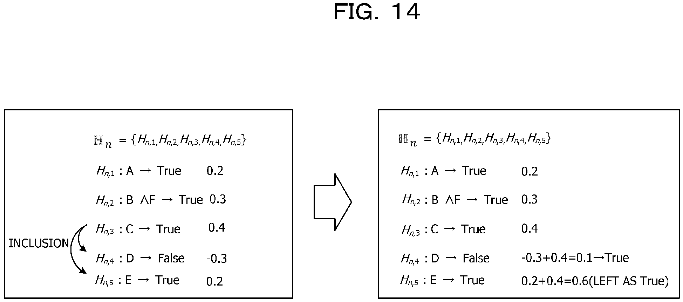

Meanwhile, when a weight is set in a hypothesis included in the hypothesis set, the generation unit 153 updates the conclusion part of the hypothesis in consideration of a weight of a hypothesis in an inclusion relationship. FIG. 14 is a diagram for explaining processing of updating a conclusion part in consideration of a weight of a hypothesis. In the example illustrated in FIG. 14, description will be made using the hypothesis set Hₙ of the training model Mn. It is assumed that hypotheses {H_{n,1}, H_{n,2}, H_{n,3}, H_{n,4}, H_{n,5}} are included. Each hypothesis is assumed as indicated below. The weights of H_{n,1}, H_{n,2}, H_{n,3}, H_{n,4}, and H_{n,5} are assumed to be 0.2, 0.3, 0.4, -0.3, and 0.2, respectively.
H_{n,1}: A → True (weight: 0.2)
H_{n,2}: B ∧ F → True (weight: 0.3)
H_{n,3}: C → True (weight: 0.4)
H_{n,4}: D -> False (weight: -0.3)
H_{n,5}: E → True (weight: 0.2)

Here, the hypothesis H_{n,3} is assumed to be included in the hypotheses H_{n,4} and H_{n,5}. In these circumstances, the generation unit 153 updates the weight of the hypothesis H_{n,4} to "0.1" by adding the weight "0.4" of the hypothesis H_{n,3} to the weight "-0.3" of the hypothesis H_{n,4} as a destination of inclusion. In addition, since the weight of the hypothesis H_{n,4} has changed from a negative value to a positive value, the conclusion part of the hypothesis H_{n,4} is updated to "True".

The generation unit 153 updates the weight of the hypothesis H_{n,5} to "0.6" by adding the weight "0.4" of the hypothesis H_{n,3} to the weight "0.2" of the hypothesis H_{n,5} as a destination of inclusion. In addition, since the weight of the hypothesis H_{n,5} has not changed from a positive value, the conclusion part of the hypothesis H_{n,5} is left as "True".

By executing the above processing, the generation unit 153 repeatedly executes processing of specifying a hypothesis set shared as common to the hypothesis sets of the respective training models belonging to the same group. Similarly, the generation unit 153 specifies a hypothesis set shared as common to the hypothesis sets of the respective groups, based on the hypothesis sets of the respective groups. By executing such processing, the generation unit 153 specifies, for example, the common hypothesis sets Hc1, Hc2-1, and Hc2-2 and the unique hypothesis sets Hc3-1, Hc3-2, Hc3-3, Hc3-4, and Hc3-n described with reference to FIG. 1. In addition, the generation unit 153 generates the hierarchical information 145 in which the common hypothesis sets Hc1, Hc2-1, and Hc2-2 and the unique hypothesis sets Hc3-1, Hc3-2, Hc3-3, Hc3-4, and Hc3-n are hierarchically coupled.

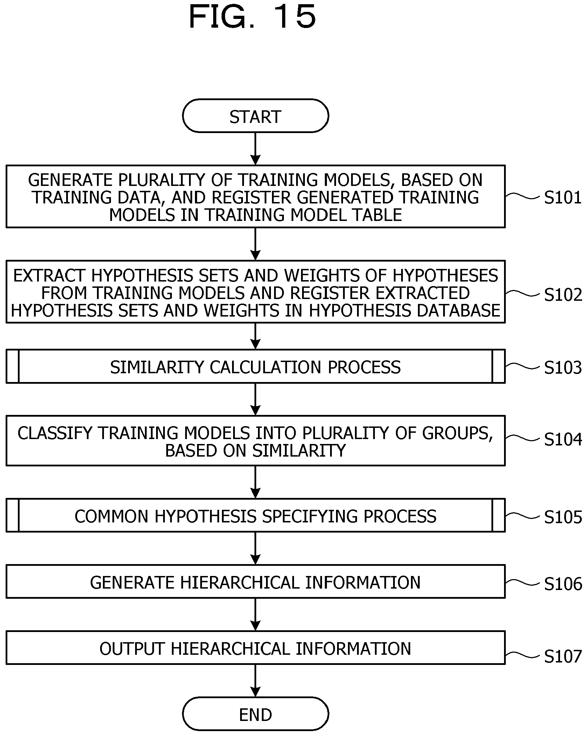

Next, a processing procedure of the information presentation device 100 according to the present embodiment will be described. FIG. 15 is a flowchart illustrating a processing procedure of the information presentation device according to the present embodiment. As illustrated in FIG. 15, the training unit 151 of the information presentation device 100 generates a plurality of training models M, based on the training data 141, and registers the generated training models M in the training model table 142 (step S101).

The classification unit 152 of the information presentation device 100 extracts hypothesis sets and weights of hypotheses from the training models M in the training model table 142 and registers the extracted hypothesis sets and weights in the hypothesis database 143 (step S102). The classification unit 152 executes a similarity calculation process (step S103).

The classification unit 152 classifies the training models into a plurality of groups, based on the similarity between the respective training models M (step S104). The generation unit 153 of the information presentation device 100 executes a common hypothesis specifying process (step S105).

The generation unit 153 generates the hierarchical information 145, based on the result of the common hypothesis specifying process (step S106). The generation unit 153 outputs the hierarchical information 145 to the display unit 130 (step S107).

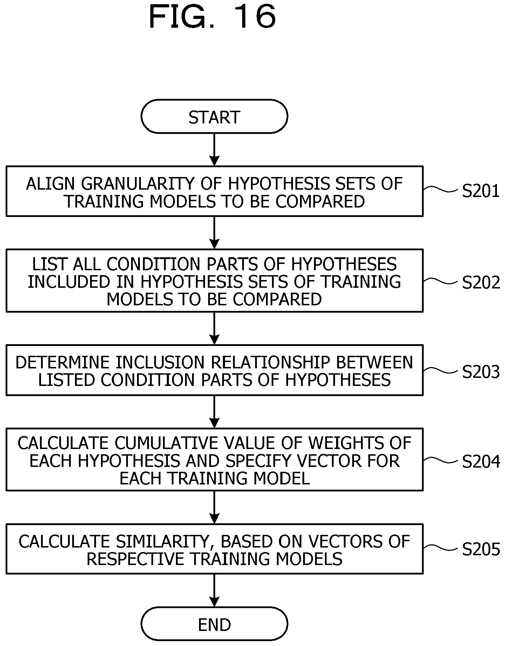

Next, an example of a processing procedure of the similarity calculation process indicated in step S103 in FIG. 15 will be described. FIG. 16 is a flowchart (1) illustrating a processing procedure of the similarity calculation process.

As illustrated in FIG. 16, the classification unit 152 of the information presentation device 100 aligns the granularity of the hypothesis sets of the training models M to be compared (step S201). The classification unit 152 lists all the condition parts of the hypotheses included in the hypothesis sets of the training models M to be compared (step S202).

The classification unit 152 determines an inclusion relationship between the listed condition parts of the hypotheses (step S203). The classification unit 152 calculates the cumulative value of weights of each hypothesis and specifies the vector for each training model M (step S204).

The classification unit 152 calculates the similarity, based on the vectors of the respective training models M (step S205).

Note that the processing procedure of the common hypothesis specifying process illustrated in step S105 in FIG. 15 corresponds to the processing procedure described in FIG. 10.

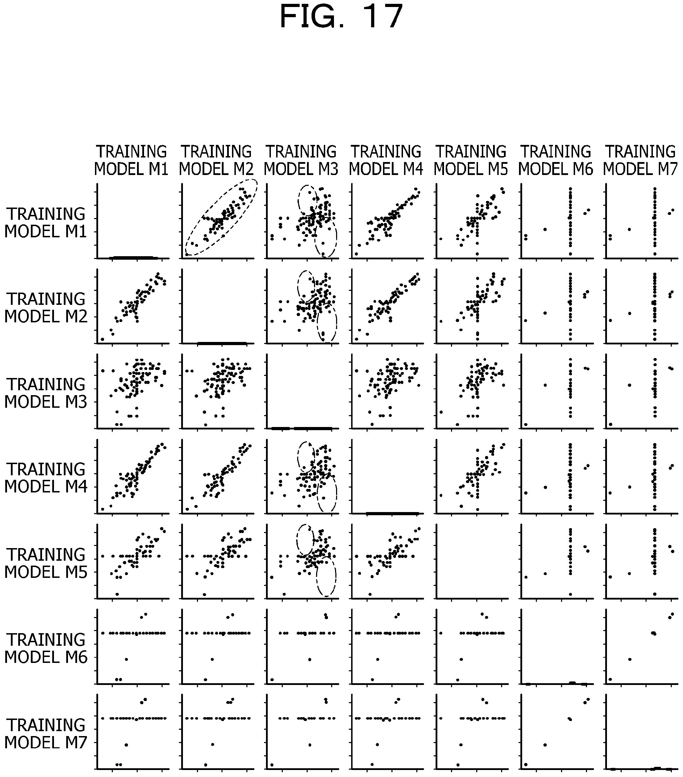

Next, an example of scatter diagrams regarding the cumulative values of weights calculated by the classification unit in FIG. 16 and the like will be described. FIG. 17 is a diagram illustrating an example of scatter diagrams of cumulative values of weights between training models. In FIG. 17, a scatter diagram of the training model Mn and the training model Mm is assumed as a scatter diagram (n, m). The vertical axis of the scatter diagram (n, m) is an axis indicating the cumulative value of the hypothesis of the training model Mn. The horizontal axis of the scatter diagram (n, m) is an axis indicating the cumulative value of the hypothesis of the training model Mm.

In FIG. 17, the scatter diagram of a set of training models M of which the similarity is equal to or higher than a threshold value will have a scatter diagram as indicated in the scatter diagram (1, 2). That is, the training models M1 and M2 are similar training models. Note that, as illustrated in scatter diagrams (1, 3), (2, 3), (4, 3), and (5, 3), the positive and negative of the cumulative values can be different between the respective training models in some cases.

Next, effects of the information presentation device 100 according to the present embodiment will be described. The information presentation device 100 generates a plurality of training models M by executing machine learning that uses the training data 141. The information presentation device 100 generates the hierarchical information 145 that represents, in a hierarchical structure, a relationship between hypotheses shared as common and hypotheses regarded as differences for a plurality of hypotheses extracted from each of the plurality of training models and each designated by a combination of one or more explanatory variables. By referring to such hierarchical information 145, the user may be allowed to see the commonality and difference of the hypotheses of the plurality of training models M, from the plurality of training models M, and may easily compare the complicated training models with each other.

The information presentation device 100 specifies a common hypothesis shared as common and a difference hypothesis regarded as a difference between the hypothesis set of one training model to be compared and the hypothesis set of another training model to be compared, and generates the hierarchical information 145 by arranging the common hypothesis in an upper layer of the difference hypothesis. The common hypothesis corresponds to the common hypothesis set in FIG. 1, and the difference hypothesis corresponds to the unique hypothesis set in FIG. 1. By the information presentation device 100 executing the above processing, the user may easily grasp a hypothesis shared as common between the training models M and a hypothesis unique to the training model M.

The information presentation device 100 specifies similarity between the training models, based on the hypothesis sets extracted from the training models M, and classifies the plurality of training models into a plurality of groups, based on the specified similarity. The information presentation device 100 specifies the common hypothesis and the difference hypothesis, based on the classification result. This may enable to specify the common hypothesis and the difference hypothesis based on the hypothesis sets of similar training models.

The information presentation device 100 aligns the granularity of the hypotheses of the hypothesis sets of the respective training models M to be compared and specifies the similarity between the respective training models M to be compared, based on the cumulative values of the hypothesis sets. This may enable to specify the similarity between the respective training models M even if the hypotheses of the training models to be compared do not completely correspond to each other.

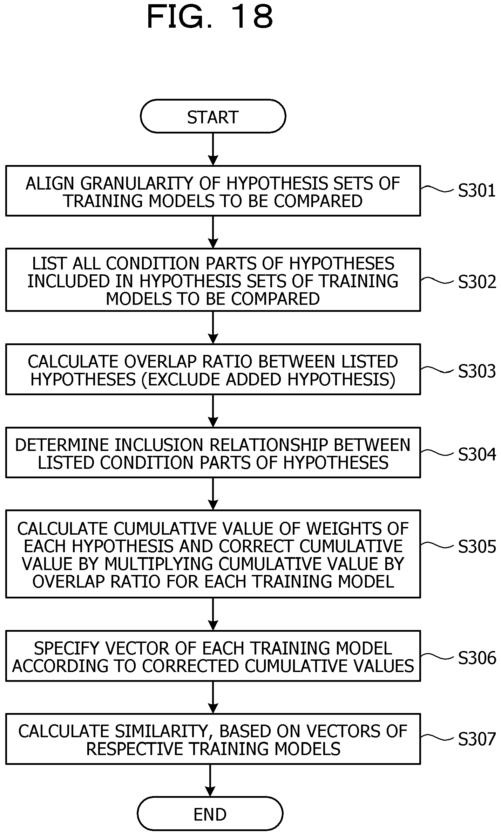

Note that the processing procedure of the similarity calculation process executed by the classification unit 152 is not limited to the processing procedure in FIG. 16, and for example, the similarity calculation process illustrated in FIG. 18 may be executed.

FIG. 18 is a flowchart (2) illustrating a processing procedure of the similarity calculation process. As illustrated in FIG. 18, the classification unit 152 of the information presentation device 100 aligns the granularity of the hypothesis sets of the training models M to be compared (step S301). The classification unit 152 lists all the condition parts of the hypotheses included in the hypothesis sets of the training models M to be compared (step S302).

The classification unit 152 calculates an overlap ratio between the listed hypotheses (step S303). In the processing in step S303, the classification unit 152 may calculate the overlap ratio by excluding a hypothesis added to make the granularity match.

The classification unit 152 determines an inclusion relationship between the listed condition parts of the hypotheses (step S304). The classification unit 152 calculates the cumulative value of weights of each hypothesis and corrects the cumulative value by multiplying the cumulative value by the overlap ratio for each training model M (step S305).

The classification unit 152 specifies the vector of each training model according to the corrected cumulative values (step S306). The classification unit 152 calculates the similarity, based on the vectors of the respective training models M (step S307).

As described with reference to FIG. 18, the classification unit 152 of the information presentation device 100 corrects the cumulative values, based on the overlap ratio of the training models M to be compared, and calculates the vector. This adjusts the vectors of the training models M to be compared, with the overlap ratio of the hypothesis sets of the training models M, and thus may enable to calculate the similarity between the respective training models M more accurately.

In addition, the classification unit 152 of the information presentation device 100 described above calculates the vectors of the training models by aligning the granularity of the hypothesis sets of the training models M to be compared, but is not limited to this. For example, the classification unit 152 may compare the hypothesis sets of the training models M to be compared to specify conjunction hypotheses and calculate the vectors using only the specified hypotheses to specify the similarity between the training models M. This allows the processing of aligning the granularity of the hypotheses to be skipped and thus may enable to specify the similar training models M while simplifying the processing.

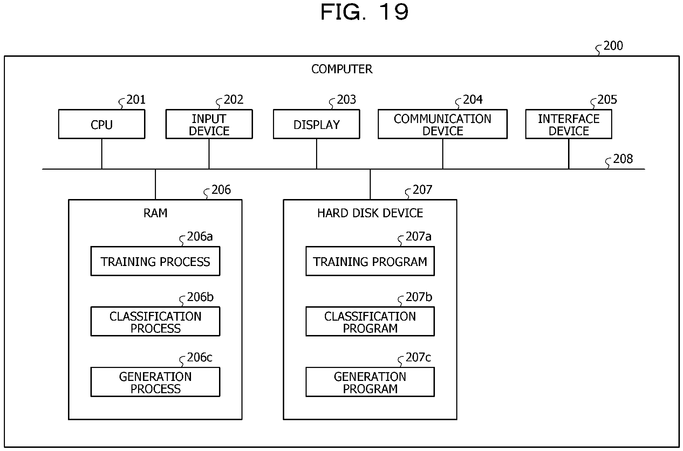

Next, an example of a hardware configuration of a computer that implements functions similar to the functions of the information presentation device 100 indicated in the above embodiments will be described. FIG. 19 is a diagram illustrating an example of a hardware configuration of a computer that implements functions similar to the functions of the information presentation device of the embodiment.

As illustrated in FIG. 19, a computer 200 includes a CPU 201 that executes various types of arithmetic processing, an input device 202 that accepts data input from a user, and a display 203. In addition, the computer 200 includes a communication device 204 that exchanges data with an external device or the like via a wired or wireless network, and an interface device 205. The computer 200 also includes a RAM 206 that temporarily stores various types of information, and a hard disk device 207. Additionally, each of the devices 201 to 207 is coupled to a bus 208.

The hard disk device 207 includes a training program 207a, a classification program 207b, and a generation program 207c. In addition, the CPU 201 reads each of the programs 207a to 207c and loads the read programs 207a to 207c into the RAM 206.

The training program 207a functions as a training process 206a. The classification program 207b functions as a classification process 206b. The generation program 207c functions as a generation process 206c.

Processing of the training process 206a corresponds to the processing of the training unit 151. Processing of the classification process 206b corresponds to the processing of the classification unit 152. Processing of the generation process 206c corresponds to the processing of the generation unit 153.

Note that each of the programs 207a to 207c does not necessarily have to be previously stored in the hard disk device 207. For example, each of the programs is stored in a "portable physical medium" to be inserted into the computer 200, such as a flexible disk (FD), a compact disc read only memory (CD-ROM), a digital versatile disc (DVD), a magneto-optical disk, or an integrated circuit (IC) card. Then, the computer 200 may read and execute each of the programs 207a to 207c.

### CITATION LIST

### NON-PATENT DOCUMENT

Non-Patent Document 1: Satoshi Hara, Takanori Maehara "Enumerate Lasso Solutions for Feature Selection" AAAI-17

Non-Patent Document 2: Satoshi Hara, Masakazu Ishihata "Approximate and Exact Enumeration of Rule Models" AAAI-18

### REFERENCE SIGNS LIST

- 100: Information presentation device
- 110: Communication unit
- 120: Input unit
- 130: Display unit
- 140: Storage unit
- 141: Training data
- 142: Training model table
- 143: Hypothesis database
- 144: Common hypothesis set table
- 145: Hierarchical information
- 150: Control unit
- 151: Training unit

- 152: Classification unit
- 153: Generation unit

## Claims

1. An information presentation program comprising instructions which, when executed by a computer, cause the computer to perform processing including:
performing a training processing that generates a plurality of training models by executing machine learning that uses training data; and
performing a generation processing that generates hierarchical information that represents, in a hierarchical structure, a relationship between hypotheses shared as common and the hypotheses regarded as differences for a plurality of the hypotheses extracted from each of the plurality of training models and each designated by a combination of one or more explanatory variables.

2. The information presentation program according to claim 1, wherein the generation processing includes
specifying common hypotheses that indicate the hypotheses shared as common to a plurality of first hypotheses extracted from a first training model and a plurality of second hypotheses extracted from a second training model, and difference hypotheses that indicate the hypotheses different between the plurality of first hypotheses and the plurality of second hypotheses, and
generating the hierarchical information by arranging the common hypotheses in an upper layer of the difference hypotheses.

3. The information presentation device according to claim 2, the processing further including
performing a classification processing that specifies similarity between respective training models, based on the plurality of the hypotheses extracted from the plurality of training models, and classifies the plurality of training models into a plurality of groups, based on the specified similarity,
wherein the generation processing specifies the common hypotheses and the difference hypotheses, based on a classification result of the classification processing.

4. The information presentation device according to claim 3, wherein the classification processing includes
aligning the plurality of first hypotheses with the plurality of second hypotheses, and
specifying the similarity between the first training model and the second training model, based on cumulative values of weights of the plurality of first hypotheses and the cumulative values of the weights of the plurality of second hypotheses.

5. The information presentation device according to claim 4, wherein the classification processing further includes correcting the cumulative values, based on an overlap ratio between the plurality of first hypotheses and the plurality of second hypotheses.

6. An information presentation method implemented by a computer, the method comprising:
performing a training processing that generates a plurality of training models by executing machine learning that uses training data; and
performing a generation processing that generates hierarchical information that represents, in a hierarchical structure, a relationship between hypotheses shared as common and the hypotheses regarded as differences for a plurality of the hypotheses extracted from each of the plurality of training models and each designated by a combination of one or more explanatory variables.

7. The information presentation method according to claim 6, wherein the generation processing includes
specifying common hypotheses that indicate the hypotheses shared as common to a plurality of first hypotheses extracted from a first training model and a plurality of second hypotheses extracted from a second training model, and difference hypotheses that indicate the hypotheses different between the plurality of first hypotheses and the plurality of second hypotheses, and
generating the hierarchical information by arranging the common hypotheses in an upper layer of the difference hypotheses.

8. The information presentation method according to claim 7, the method further including
performing a classification processing that specifies similarity between respective training models, based on the plurality of the hypotheses extracted from the plurality of training models, and classifies the plurality of training models into a plurality of groups, based on the specified similarity,
wherein the generation processing specifies the common hypotheses and the difference hypotheses, based on a classification result of the classification processing.

9. The information presentation method according to claim 8, wherein the classification processing includes
aligning the plurality of first hypotheses with the plurality of second hypotheses, and
specifying the similarity between the first training model and the second training model, based on cumulative values of weights of the plurality of first hypotheses and the cumulative values of the weights of the plurality of second hypotheses.

10. The information presentation method according to claim 9, wherein the classification processing further includes correcting the cumulative values, based on an overlap ratio between the plurality of first hypotheses and the plurality of second hypotheses.

11. An information presentation device comprising:
a training unit that generates a plurality of training models by executing machine learning that uses training data; and
a generation unit that generates hierarchical information that represents, in a hierarchical structure, a relationship between hypotheses shared as common and the hypotheses regarded as differences for a plurality of the hypotheses extracted from each of the plurality of training models and each designated by a combination of one or more explanatory variables.

12. The information presentation device according to claim 11, wherein the generation unit specifies common hypotheses that indicate the hypotheses shared as common to a plurality of first hypotheses extracted from a first training model and a plurality of second hypotheses extracted from a second training model, and difference hypotheses that indicate the hypotheses different between the plurality of first hypotheses and the plurality of second hypotheses, and generates the hierarchical information by arranging the common hypotheses in an upper layer of the difference hypotheses.

13. The information presentation device according to claim 12, further comprising a classification unit that specifies similarity between respective training models, based on the plurality of the hypotheses extracted from the plurality of training models, and classifies the plurality of training models into a plurality of groups, based on the specified similarity, wherein the generation unit specifies the common hypotheses and the difference hypotheses, based on a classification result of the classification unit.

14. The information presentation device according to claim 13, wherein the classification unit aligns the plurality of first hypotheses with the plurality of second hypotheses, and specifies the similarity between the first training model and the second training model, based on cumulative values of weights of the plurality of first hypotheses and the cumulative values of the weights of the plurality of second hypotheses.

15. The information presentation device according to claim 14, wherein the classification unit further executes a process of correcting the cumulative values, based on an overlap ratio between the plurality of first hypotheses and the plurality of second hypotheses.
